# EUROPEAN PATENT APPLICATION

(11) **EP 4 358 281 A1**
(43) Date of publication of application: **24.04.2024**
(21) Application number: 22900129.2
(22) Date of filing: 18.10.2022
(51) Int. Cl.: H01M 50/536

(54) **ELECTRODE ASSEMBLY AND POWER BATTERY**

(30) Priority: 30.11.2021 CN 202122970315 U
(71) Applicant: Contemporary Amperex Technology Co., Limited, Ningde, Fujian 352100 (CN)
(72) Inventor: HUANG, Yaping, Ningde, Fujian 352100 (CN); ZHANG, Xiaowen, Ningde, Fujian 352100 (CN); ZHONG, Wei, Ningde, Fujian 352100 (CN); QIAN, Pengcheng, Ningde, Fujian 352100 (CN); LIN, Mingxiang, Ningde, Fujian 352100 (CN)
(74) Representative: Behr, Wolfgang
(86) International application number: PCT/CN2022/126003
(87) International publication number: WO 2023/098324

(57) **Abstract**

Embodiments of the present disclosure provide an electrode assembly and a traction battery. The electrode assembly includes a plurality of tabs. The plurality of tabs is stacked to each other. At least one of the plurality of tabs includes a tab body and a free end connected to the tab body. The free end is formed into a bent portion through at least a single bending. The bent portion is stacked at a side of the tab body. In some specific embodiments, the tab is designed as a long tab with a long length. When ultrasonic welding is performed, the tab is bent to form the bent portion, and the bent portion is stacked on the tab body for the ultrasonic welding. In this case, since a thickness of a position where the ultrasonic welding is performed is increased, welding stability of the tab can be improved.

## Description

This application claims a priority to Chinese Patent Application No. 202122970315.7, titled "ELECTRODE ASSEMBLY AND TRACTION BATTERY" and filed on November 30, 2021, the entire contents of which are incorporated herein by reference.

### FIELD

The present disclosure relates to the field of battery manufacturing, and more particularly, to an electrode assembly and a traction battery.

### BACKGROUND

This part provides only background information relevant to the present disclosure, which is not necessarily the prior art.

With the popularization of electric vehicles, traction batteries have been widely used. Currently, a traction battery is usually packaged by a top cover after a cathode electrode sheet, an anode electrode sheet, and a separator are wound or stacked. A plurality of tabs stacked to each other is led out from each of the cathode electrode sheet and the anode electrode sheet. The tab is welded to an adapting member connected the top cover, which achieves that the tab is electrically connected to the top cover.

In the related art, due to a low current flow capacity of the tab welded to the adapting member, a temperature of the traction battery is likely to rise too quickly during discharge or charging of the traction battery, which may even cause a fire or an explosion of the traction battery in serious cases.

### SUMMARY

### TECHNICAL PROBLEM

The present disclosure aims to provide an electrode assembly and a traction battery, to solve problems of a low current flow capacity and a rapid temperature rise of a tab in the related art.

### SOLUTION TO THE TECHNICAL PROBLEM

### TECHNICAL SOLUTION

To achieve the above objects, the present disclosure provides the following technical solutions.

In a first aspect, embodiments of the present disclosure provide an electrode assembly. The electrode assembly includes a plurality of tabs stacked to each other. At least one of the plurality of tabs includes a tab body and a free end connected to the tab body. The free end is formed into a bent portion through at least a single bending. The bent portion is stacked at a side of the tab body.

In addition, according to the embodiments of the present disclosure, the following additional technical features can be further provided.

In some embodiments of the present disclosure, the bent portion includes a first bent section and a second bent section. The first bent section is stacked at a side of the tab body. The second bent section is stacked at a side of the first bent section away from the tab body. In the embodiments, by bending the tab body twice, a thickness of the tab can be further increased to improve the current flow capacity of the tab in the electrode assembly, which in turn provides satisfying temperature rise performance for the traction battery during charging or discharging of the traction battery, avoiding a safety hazard of a fire or an explosion of the traction battery.

In some embodiments of the present disclosure, the plurality of tabs 200 includes a tab 220 with the bent portion and a tab 200 without the bent portion 220. The tab 200 with the bent portion 220 is disposed between the plurality of tabs 200 without the bent portion 220, or the tab 200 with the bent portion 220 is disposed at a side of the plurality of tabs 200 without the bent portion 220. In the embodiments, by disposing the tab with the bent portion between the plurality of tabs without the bent portion, welding stability of the tab can be increased to avoid problems such as a raised edge of the bent tab. By disposing the tab with the bent portion at the side of the plurality of tabs without the bent portion away from an adapting member, whether a part of the tab on which the welding is performed can cover the bent portion of the tab can be clearly observed during the welding of the tab, to ensure a yield rate of the welding.

In some embodiments of the present disclosure, the tab is a first tab or a second tab. The first tab and the second tab have opposite polarities. In the embodiments, that "the tab is a first tab or a second tab" means that the tab may be a positive tab or a negative tab. In the embodiments, to facilitate the welding of the tab, the bent portion is formed in a rectangular shape or a trapezoidal shape to enlarge an area of a weld spot obtained after the welding, which is conducive to stably fixing the tab at the adapting member, increasing the welding stability of the tab. In some embodiments of the present disclosure, the bent portion has a rectangular shape or a trapezoidal shape.

In some embodiments of the present disclosure, the electrode assembly further includes a protection sheet sandwiched between two adjacent ones of the plurality of tabs and/or located at a side of the bent portion away from the tab body. In the embodiments, by disposing the protection sheet between two adjacent ones of the plurality of tabs or disposing the protection sheet at the side of the bent portion away from the tab body, welding strength of the tab can be further reinforced.

In a second aspect, the embodiments of the present disclosure provide a traction battery. The traction battery includes the electrode assembly according to any of the embodiments in the first aspect.

Since the traction battery according to the embodiments of the present disclosure includes the electrode assembly according to any of the embodiments in the first aspect, the embodiments of the present disclosure can also provide advantageous effects in the embodiments of the first aspect. Specifically, the traction battery according to the embodiments includes the electrode assembly. In the electrode assembly, the at least one tab includes the tab body and the bent portion. In some specific embodiments, the tab is designed as a long tab with a long length. When ultrasonic welding is performed, the bent portion is formed at the tab through at least a single bending, and the ultrasonic welding is performed after the bent portion is stacked on the tab body. In this case, since a thickness of a position where the ultrasonic welding is performed is increased, the welding stability of the tab can be improved. In addition, when the thickness of the part of the tab on which the welding is performed is increased, the current flow capacity of the tab in the electrode assembly can be improved. By improving the current flow capacity of the tab, the traction battery can provide satisfying temperature rise performance during the charging or discharging of the traction battery, avoiding the safety hazard of a fire or an explosion of the traction battery.

In some embodiments of the present disclosure, the traction battery further includes an adapting member connected to the plurality of tabs of the electrode assembly through welding. The bent portion of the at least one tab is located at a side of the tab body away from the adapting member. A weld spot at a connection between the adapting member and the at least one tab is located at the bent portion. In the embodiments, to stably fix the bent portion to the tab body, the bent portion needs to be welded to the tab body during the welding of the tab, and thus the weld spot in the embodiments is located at the bent portion. In this way, the welding stability of the tab can be increased. Since the bent portion of the at least one tab is located at the side of the tab body away from the adapting member, whether the part of the tab on which the welding is performed can cover the bent portion of the tab can be clearly observed during the welding of the tab, to ensure the yield rate of the welding.

In some embodiments of the present disclosure, the traction battery further includes a tape adhering to a surface of the weld spot formed through welding. In the embodiments, adhering the tape to the surface of the weld spot can, on the one hand, provide insulation, i.e., the tape can avoid a conductive circuit formed when the tab is in contact with an ambient environment, and on the other hand, prevent weld slags formed after the welding from falling into an interior of a battery cell.

In some embodiments of the present disclosure, the tape has a slit corresponding to the weld spot. In the embodiments, the tape is adhered to the weld spot of the tab, and the slit is formed at the position of the tape corresponding to the weld spot. In a subsequent transfer and production process, a stress can be released through forming the slit on the tape, which can effectively prevent the tape from pulling a root of the weld spot, avoiding cracking of the root of the weld spot of an outermost tab.

The above description is merely an overview of the technical solutions of the present disclosure. To facilitate a clear understanding of technical means of the present disclosure to implement the technical solutions in accordance with the contents of the specification, and to clarify and explain the above and other objects, features, and advantages of the present disclosure, specific embodiments of the present disclosure will be described below.

### ADVANTAGEOUS EFFECT OF PRESENT APPLICATION

### ADVANTAGEOUS EFFECT

With the electrode assembly according to the embodiments of the present disclosure, at least one tab includes the tab body and the bent portion. When ultrasonic welding is performed, the bent portion is formed at the tab through at least a single bending, and the bent portion is stacked on the tab body for the ultrasonic welding. In this case, since the thickness of the position where the ultrasonic welding is performed is increased, the welding stability of the tab can be improved. In addition, when the thickness of the part of the tab on which the welding is performed is increased, the current flow capacity of the tab in the electrode assembly can be improved. With the improved current flow capacity of the tab, the traction battery can provide satisfying temperature rise performance during the charging or discharging of the traction battery, avoiding the safety hazard of a fire or an explosion of the traction battery.

### BRIEF DESCRIPTION OF THE DRAWINGS

Various other advantages and benefits will become apparent to those skilled in the art after reading the detailed description of embodiments given below. The accompanying drawings are used for a purpose of illustrating the embodiments only, rather than limiting the present disclosure. In addition, same elements are denoted by same reference numerals throughout the accompanying drawings. In the accompanying drawings:
FIG. 1 is a schematic diagram of a structure of an electrode assembly according to an embodiment of the present disclosure.
FIG. 2 is a side view of FIG. 1.
FIG. 3 is a schematic diagram of a structure of an electrode assembly according to another embodiment of the present disclosure (a tab has two bent portions).
FIG. 4 is a side view of FIG. 3.
FIG. 5 is a side view of FIG. 3 (a protection sheet is provided).
FIG. 6 is a schematic diagram of a structure of an electrode assembly according to yet another embodiment of the present disclosure (a tab has three bent portions).
FIG. 7 is a side view of FIG. 6.
FIG. 8 is a side view of FIG. 6 (a protection sheet is provided).
FIG. 9 is a side view of FIG. 1 (two protection sheets are provided).
FIG. 10 is a schematic diagram of a bent tab according to an embodiment of the present disclosure.
FIG. 11 is a schematic diagram of a structure of a traction battery according to an embodiment of the present disclosure.

Reference numerals in the accompanying drawings are explained as follows:
10, electrode assembly; 100, main body portion; 200, tab; 210, tab body;
220, bent portion; 221, first bent section; 222, second bent section; 300, weld spot;
400, adapting member; 500, tape; 510, slit; 600, protection sheet.

### DETAILED DESCRIPTION

Embodiments of technical solutions of the present disclosure will be described in detail below with reference to the accompanying drawings. The following embodiments are only used to explain the technical solutions of the present disclosure more clearly, and therefore should be construed as examples only, rather than limitations of the protection scope of the present disclosure.

Unless otherwise defined, all technical and scientific terms used herein have the same meaning as commonly understood by those skilled in the art of the present disclosure. Terms in the present disclosure herein are only used for the purpose of describing specific embodiments, and are not intended to limit the present disclosure. Terms "including", "having", and any variations thereof in the specification, claims, and accompanying drawings of the present disclosure are intended to cover non-exclusive inclusions.

In the description of the embodiments of the present disclosure, the technical terms "first", "second", etc. are used to distinguish different objects, and cannot be understood as indicating or implying relative importance or implicitly specifying a number, a particular order, or a primary or secondary relationship of the indicated technical features. In the description of the embodiments of the present disclosure, "plurality" means at least two, unless otherwise specifically defined.

In the present disclosure, reference to "embodiment" means that a particular feature, structure, or characteristic described in conjunction with the embodiment or implementation may be included in at least one embodiment of the present disclosure. The presence of the term at each place in the specification does not necessarily refer to the same embodiment, nor does it refer to a separate or alternative embodiment that is mutually exclusive of other embodiments. It should be understood by those skilled in the art, both explicitly and implicitly, that the embodiments described herein may be combined with other embodiments.

In the description of the embodiments of the present disclosure, the term "and/or" only represents a relationship between correlated objects, including three relationships. For example, "A and/or B" may mean three situations: A only, B only, or both A and B. In addition, the character "/" in the present disclosure generally represents an "or" relationship between the correlated objects preceding and succeeding the symbol.

In the description of the embodiments of the present disclosure, the term "plurality" refers to more than two (including two). Similarly, "plurality of groups" refers to more than two groups (including two groups), and "plurality of pieces" refers to more than two pieces (including two pieces).

In the description of the embodiments of the present disclosure, the orientation or the position indicated by technical terms such as "center", "longitudinal", "lateral", "length", "width", "thickness", "over", "below", "front", "rear", "left", "right", "vertical", "horizontal", "top", "bottom", "inner", "outer", "clockwise", "anti-clockwise", "axial", "radial", and "circumferential" should be construed to refer to the orientation and the position as shown in the drawings, and is only for the convenience of describing the embodiments of the present disclosure and simplifying the description, rather than indicating or implying that the pointed device or element must have a specific orientation, or be constructed and operated in a specific orientation, and therefore cannot be understood as a limitation of the embodiments of the present disclosure.

In the description of the embodiments of the present disclosure, unless otherwise clearly specified and limited, technical terms such as "install", "connect", "connect to", "fix" and the like should be understood in a broad sense. For example, it may be a fixed connection or a detachable connection or connection as one piece; mechanical connection or electrical connection; direct connection or indirect connection through an intermediate; internal communication of two components or the interaction relationship between two components. For those skilled in the art, the specific meaning of the above-mentioned terms in the embodiments of the present disclosure can be understood according to specific circumstances.

At present, from the perspective of the development of the market, the application of traction batteries is more and more extensive. Traction batteries are not only applied to energy storage power systems such as hydro power stations, thermal power stations, wind power stations, and solar power stations, but also widely applied to electric means of transportation such as electric bicycles, electric motorcycles, and electric vehicles, and fields such as military equipment and aerospace. With a continuous expansion of the application field of traction batteries, a market demand for the traction batteries is also increasing.

In the related art, a traction battery is usually packaged by a top cover after a cathode electrode sheet, an anode electrode sheet, and a separator are wound or stacked. A plurality of tabs stacked to each other is led out from each of the cathode electrode sheet and the anode electrode sheet. The tab is weld to an adapting member connected to the top cover, which achieves that the tab is electrically connected to the top cover. Due to a low current flow capacity of the tab welded to the adapting member, a temperature of the traction battery is likely to rise too quickly during discharge or charging of the traction battery, which may even cause a fire or an explosion of the traction battery in serious cases. After in-depth research, an electrode assembly is designed. Providing the bent portion at the free end of the tab can improve a current flow capacity of the tab. With the improved current flow capacity of the tab, the traction battery can provide satisfying temperature rise performance during the charging or discharging of the traction battery, avoiding the safety hazard of a fire or an explosion of the traction battery.

According to the embodiments of the present disclosure, an electrode assembly and a traction battery are provided. The traction battery can be, but is not limited to being, applied in a cell phone, a tablet, a laptop computer, an electric toy, an electric tool, an electric scooter, an electric vehicle, a ship, a spacecraft, and the like. The electric toy may include a fixed electric toy or a mobile electric toy, e.g., a game console, an electric car toy, an electric ship toy, and an electric airplane toy. The spacecraft may include an airplane, a rocket, a space shuttle, a spaceship, or the like.

The traction battery includes a case and a battery cell. The battery cell is accommodated in the case. The case is configured to provide an accommodation space for the battery cell and may be of various structures. In some embodiments, the case may include a first portion and a second portion that are capped on each other. The accommodation space for accommodating the battery cell is defined by the first portion and the second portion together. The second portion may have a hollow structure with an open end while the first portion may have a plate-like structure. The first portion is capped at an open side of the second portion to define the accommodation space by the first portion and the second portion together. Each of the first portion and the second portion may also have a hollow structure with an open side. The open side of the first portion is capped at the open side of the second portion. Of course, the case formed by the first portion and the second portion may be of various shapes, such as a cylinder and a cuboid.

In the traction battery, a plurality of battery cells may be provided. The plurality of battery cells may be connected in series or in parallel or in series and parallel. The expression "in series and parallel" means that the plurality of battery cells is connected both in series and in parallel. The plurality of battery cells may be directly connected in series or in parallel or in series and parallel, and then accommodated in the case as a whole. Of course, for the traction battery, the plurality of battery cells may also be connected in series or in parallel or in series and parallel to form a battery module, and then a plurality of battery modules may be connected in series or in parallel or in series and parallel and accommodated in the case as a whole. The traction battery may further have other structures. For example, the traction battery may further include a busbar configured to implement an electrical connection between the plurality of battery cells.

Each battery cell may be a rechargeable battery or a primary battery. The battery cell may further be a lithium-sulfur battery, a sodium-ion battery, or a magnesium-ion battery. The present disclosure is not limited to any of these examples. The battery cell may be in a shape of a cylinder, a flat body, a cuboid, or the like.

The battery cell is the smallest unit that makes up a battery. The battery cell includes an end cover, a housing, an electrode assembly, and other functional members. The end cover is a member that covers an opening of the housing to isolate an internal environment of the battery cell from an external environment. Functional members such as an electrode terminal may be disposed at the end cover. The electrode terminal can be configured to be electrically connected to the electrode assembly to output or input electric energy of the battery cell. The housing is an assembly configured to cooperate with the end cover to form the internal environment of the battery cell. The formed internal environment can be configured to accommodate the electrode assembly, an electrolyte, and other members. One or more electrode assemblies 10 may be included in the housing. The electrode assembly 10 is formed primarily by winding or stacking a positive electrode sheet and a negative electrode sheet. Typically, a separator is located between the positive electrode sheet and the negative electrode sheet. Parts of the positive electrode sheet and the negative electrode sheet that contain active substances form a main body portion 100 of the electrode assembly 10. Parts of the positive electrode sheet and the negative electrode sheet that contain no active substances each form a tab 200. A positive tab and a negative tab may be both located at one end of the main body portion, or may be located at two ends of the main body portion 100, respectively. During charging and discharging of the battery, positive active substances and negative active substances are reacted with the electrolyte. The tab is connected to the electrode terminal to form a current circuit.

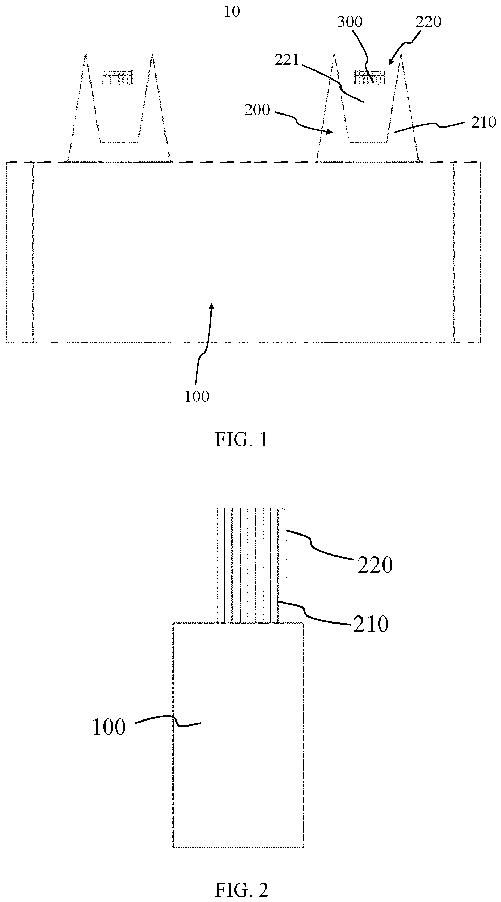

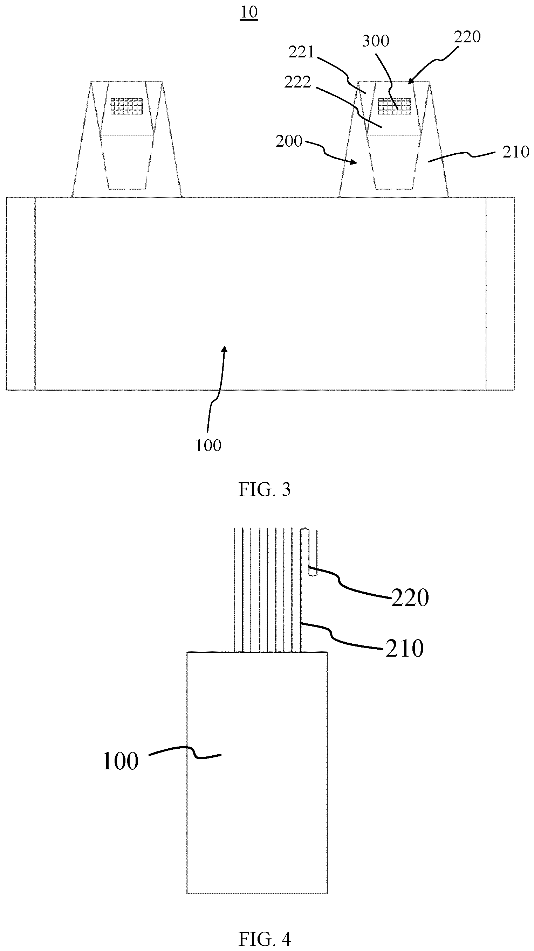

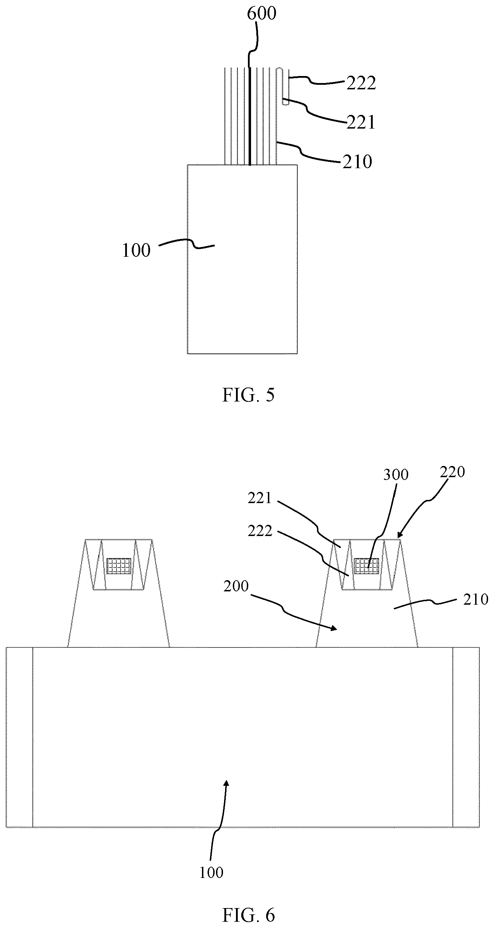

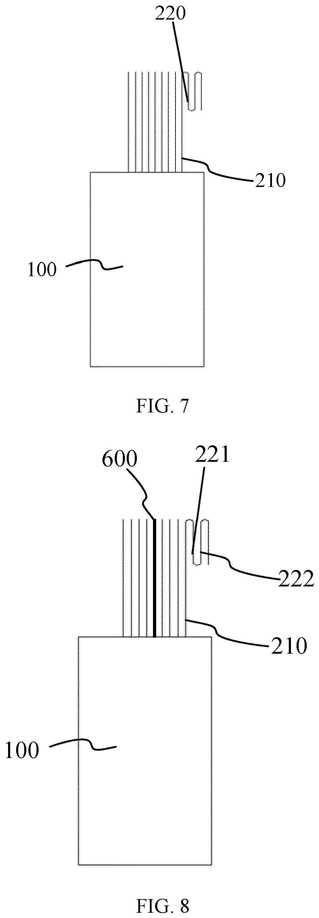

As illustrated in FIG. 1 to FIG. 9, an embodiment in a first aspect of the present disclosure provides the electrode assembly 10. The electrode assembly 10 includes a plurality of tabs 200 stacked to each other. At least one of the plurality of tabs 200 includes a tab body 210 and a free end connected to the tab body 210. The free end is formed into a bent portion 220 through at least a single bending. The bent portion 220 is stacked at a side of the tab body 210.

In each of the positive electrode sheet and the negative electrode sheet, the tab 200 is a portion that contains no active substance. In the related art, one electrode assembly 10 includes a plurality of tabs 200 stacked to each other. The plurality of tabs 200 is welded to an adapting member 400 of the traction battery through ultrasonic welding, and then the adapting member 400 is welded to the top cover of the battery cell through laser welding to realize a battery circuit.

The tab body 210 is a main part of the tab 200. An end of the tab body 210 is connected to the main body portion 100. The free end is connected to an end of the tab body 210 away from the main body portion 100.

The bent portion 220 is formed by bending the free end and is stacked at a side of the tab body 210. In an embodiment of the present disclosure, a form in which the tab 200 is bend and the number of times the tab 200 is bent are not specially limited. That is, the bent portion 220 may be stacked at the side of the tab body 210 through bending, or the bent portion 220 may be bent and then bent in half and stacked at the side of the tab body 210. The expression "bent in half' means that both the tab body 210 and the bent tab 200 are bent. In this case, when viewed from the side, the tab 200 bent twice has a four-layer structure. Of course, after the bent portion 220 is stacked at the side of the tab body 210 through bending, the free end may be bent again without bending the tab body 210. In this case, when viewed from the side, the tab 200 bent twice has a three-layer structure. In the related art, the electrode assembly 10 includes the plurality of tabs 200 stacked to each other. The plurality of tabs 200 is connected to the adapting member 400 of the traction battery through the ultrasonic welding. The bent portion 220 of the tab 200 may be located at a side of the tab 200 close to the adapting member 400 or a side of the tab 200 away from the adapting member 400. The present disclosure is not specially limited in this regard. It should be understood that, when the bent portion 220 is disposed at the side away from the adapting member 400, the ultrasonic welding may be implemented more conveniently. Therefore, optionally, the bent portion 220 is disposed at the side away from the adapting member 400.

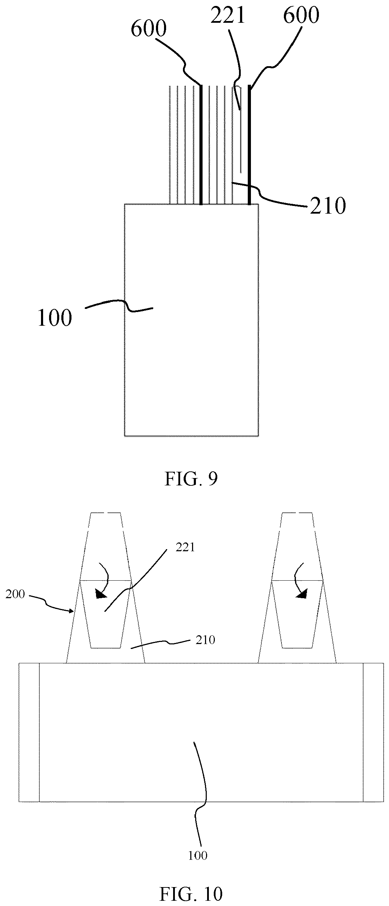

As illustrated in FIG. 10, with the electrode assembly 10 according to an embodiment of the present disclosure, the at least one tab 200 includes the tab body 210 and the bent portion 220. When the ultrasonic welding is performed, the tab 200 is bent to form the bent portion 220, and the ultrasonic welding is performed after the bent portion 220 is stacked on the tab body 210. In this case, since a thickness of a position where the ultrasonic welding is performed is increased, welding stability of the tab 200 can be improved. In addition, when a thickness of a part of the tab 200 on which the welding is performed is increased, a current flow capacity of the tab 200 in the electrode assembly 10 can be improved. By improving the current flow capacity of the tab 200, the traction battery can provide satisfying temperature rise performance during charging or discharging of the traction battery, avoiding the safety hazard of a fire or an explosion of the traction battery.

In some embodiments of the present disclosure, the bent portion 220 includes a first bent section 221 and a second bent section 222. The first bent section 221 is stacked at a side of the tab body 210. The second bent section 222 is stacked at a side of the first bent section 221 away from the tab body 210.

The first bent section 221 is formed through a single bending of the free end of the tab 200. In this case, the first bent section 221 is stacked at a side of the tab body 210, and then the second bent section 222 is formed after the free end of the tab 200 is further bent. In this case, the second bent section 222 is stacked at a side of the first bent section 221 away from the tab body 210. In the embodiments of the present disclosure, the way of bending the tab 200 may also be in other forms. For example, the first bent section 221 is the bent portion 220 formed through a single bending of the free end of the tab 200 is bent. In this case, the first bent section 221 is further bent inwards. In this way, the first bent section 221 is sandwiched between the tab body 210 and the bent free end. In this case, the second bent section 222 is the outermost bent section 220. The form of bending the tab 200 is not specially limited in the embodiments of the present disclosure. Therefore, the bent portion 220 stacked at the side of the tab body 210 is referred to as the first bent section 221, and the bent portion 220 stacked at the side of the first bent section 221 away from the tab body 210 is referred to as the second bent section 222. In the related art, the battery assembly includes a plurality of tabs 200, in which tabs 200 including the first bent section 221 and the second bent section 222 may be of any quantity. The present disclosure is not specially limited in this regard.

In the embodiments of the present disclosure, by bending the tab body 210 twice, a thickness of the tab 200 can be further increased to improve the current flow capacity of the tab 200 in the electrode assembly 10, which in turn provides satisfying temperature rise performance for the traction battery during charging or discharging of the traction battery, avoiding a safety hazard of a fire or an explosion of the traction battery.

In some embodiments of the present disclosure, the plurality of tabs 200 includes a tab 200 with the bent portion 220 and a tab 200 without the bent portion 220. The tab 200 with the bent portion 220 is disposed between the plurality of tabs 200 without the bent portion 220, or the tab 200 with the bent portion 220 is disposed at a side of the plurality of tabs 200 without the bent portion 220.

The electrode assembly 10 includes the plurality of tabs 200. The plurality of tabs 200 includes the tab 200 with the bent portion 220 and the tab 200 without the bent portion 220. In addition, the plurality of tabs 200 is stacked to each other and is welded to the adapting member 400 of the traction battery through the ultrasonic welding. In a specific embodiment, one tab 200 with the bent portion 220 is provided, which may be disposed between the plurality of tabs 200 without the bent portion 220, or may be disposed at the side of the plurality of tabs 200 without the bent portion 220. The side of the plurality of tabs 200 may be a side away from the adapting member 400 or a side close to the adapting member 400. In another specific embodiment, a plurality of tabs 200 with the bent portions 220 is provided. The plurality of tabs 200 with the bent portions 220 may be located between two adjacent tabs 200 without the bent portion 220. Alternatively, one of the plurality of tabs 200 with the bent portion 220 is located at the side of the plurality of tabs 200 without the bent portion 220, and some other tabs 200 of the plurality of tabs 200 with the bent portions 220 are located between the plurality of tabs 200 without the bent portion 220. The bent portion 220 of the tab 200 may be disposed at a side of the tab body 210 away from the adapting member 400 or at a side of the tab body 210 close to the adapting member 400. The present disclosure is not specially limited in this regard. In another specific embodiment, the tab 200 with the bent portion 220 may also be a tab 200 including the first bent section 221 and the second bent section 222. In addition, a quantity of tabs 200 with the first bent section 221 and the second bent section 222 is not specifically limited. That is, the plurality of tabs 200 with the bent portions 220 may all be tabs 200 including the first bent section 221 and the second bent section 222, or some of the plurality of tabs 200 with the bent portions 220 may be tabs 200 including the first bent section 221 and the second bent section 222. A position of the tab 200 with the first bent section 221 and the second bent section 222 is also not specifically limited, which may be located between the plurality of tabs 200 without the bent portion 220 or located at the side of the plurality of tabs 200 without the bent portion 220.

In this embodiment, by disposing the tab 200 with the bent portion 220 between the plurality of tabs 200 without the bent portion 220, the welding stability of the tab 200 can be increased to avoid problems such as a raised edge of the bent tab 200. By disposing the tab 200 with the bent portion 220 at the side of the plurality of tabs 200 without the bent portion 220 away from the adapting member 400, whether a part of the tab 200 on which the welding is performed can cover the bent portion 220 of the tab 200 can be clearly observed during the welding of the tab 200, to ensure a yield rate of the welding.

In some embodiments of the present disclosure, the tab 200 is a first tab or a second tab. The first tab and the second tab have opposite polarities.

The electrode assembly 10 is formed primarily by winding or stacking the positive electrode sheet and the negative electrode sheet. Typically, the separator is located between the positive electrode sheet and the negative electrode sheet. The parts of the positive electrode sheet and the negative electrode sheet that contain the active substances form the main body portion of the electrode assembly 10. The parts of the positive electrode sheet and the negative electrode sheet that contain no active substances each form the tab 200. It should be understood that the tab 200 according to the embodiments of the present disclosure being the first tab or the second tab means that the tab 200 may be a positive tab or a negative tab.

In some embodiments of the present disclosure, the bent portion 220 has a rectangular shape or a trapezoidal shape.

In this embodiment, when the tab 200 has the rectangular shape, the bent portion 220 formed by bending the free end of the tab 200 is rectangular. When the tab 200 has the trapezoidal shape, the bent portion 220 formed by bending the free end of the tab 200 is trapezoidal. Therefore, in this embodiment, a shape of the bent portion 220 depends on the shape of the tab 200. Since the tab 200 is welded to the adapting member 400 of the traction battery through the ultrasonic welding, to facilitate the welding of the tab 200, the bent portion 220 is formed in the rectangular shape or the trapezoidal shape to enlarge an area of a weld spot 300 obtained after the welding, which is conducive to stably fixing the tab 200 at the adapting member 400, increasing the welding stability of the tab 200.

In some embodiments of the present disclosure, the electrode assembly 10 further includes a protection sheet 600. The protection sheet 600 is sandwiched between two adjacent tabs 200, and/or the protection sheet 600 is located at a side of the bent portion 220 away from the tab body 210.

The protection sheet 600 can be a positive protection sheet or a negative protection sheet. The positive protection sheet is connected to the positive tab. The negative protection sheet is connected to the negative tab. A material of the protection sheet 600 is not specially limited. The protection sheet 600 may be made of stainless steel, nickel, nickel-plated copper, copper and aluminum, etc. The protection sheet 600 is connected to the tab 200 through welding. Therefore, when the welding is performed on the tab 200, the tab 200 should be simultaneously welded to the protection sheet 600 sandwiched between the tabs 200 or located at the side of the bent portion 220 away from the tab body 210.

In this embodiment, by disposing the protection sheet 600 between two adjacent tabs 200 or disposing the protection sheet 600 at the side of the bent portion 220 away from the tab body 210, welding strength of the tab 200 can be further reinforced. In some specific embodiments, the tab 200 with the bent portion 220 is disposed at a side of the tab 200 away from the adapting member 400, and the bent portion 220 is disposed at the side of the tab body 210 away from the adapting member 400. As illustrated in FIG. 9, two protection sheets 600 are provided. One of the two protection sheets 600 is disposed at the side of the bent portion 220 away from the tab body 210 and covers the bent portion 220, while the other one of the two protection sheets 600 is disposed between two adjacent tabs 200. In this way, when the ultrasonic welding is performed on the tab 200, the protection sheet 600 located at the side of the bent portion 220 away from the tab body 210 can protect the bent portion 220 to reduce a risk of over-welding, while the protection sheet 600 disposed between two adjacent tabs 200 can improve the welding stability and stability uniformity of the tab 200, further reinforcing the welding strength of the tab 200.

In some embodiments of the present disclosure, the electrode assembly 10 includes the plurality of tabs 200 stacked to each other. The at least one of the plurality of tabs 200 includes the tab body 210 and the free end connected to the tab body 210. The free end is formed into a bent portion 220 through at least a single bending. The bent portion 220 is stacked at the side of the tab body 210. The tab 200 with the bent portion 220 is disposed in the plurality of tabs 200 and is located between two of the plurality of tabs 200, or the tab 200 with the bent portion 220 is disposed at the side of the plurality of tabs 200. The plurality of tabs 200 includes a plurality of positive tabs and a plurality of negative tabs. A quantity of the plurality of positive tabs is identical to a quantity of the plurality of negative tabs. In addition, a quantity of tabs 200 with the bent portions 220 in the plurality of positive tabs is identical to a quantity of tabs 200 with the bent portions 220 in the plurality of negative tabs.

With the electrode assembly 10 according to the embodiments of the present disclosure, each of the plurality of positive tabs and the plurality of negative tabs includes the tab body 210 and the bent portion 220. In some specific embodiments, the tab 200 is designed as a long tab 200 with a long length. When the ultrasonic welding is performed, the tab 200 is bent to form the bent portion 220, and the ultrasonic welding is performed after the bent portion 220 is stacked on the tab body 210. In this case, since the thickness of the position where the ultrasonic welding is performed is increased, the welding stability of the tab 200 can be improved. In addition, when the thickness of the part of the tab 200 on which the welding is performed is increased, the current flow capacity of the tab 200 in the electrode assembly 10 can be improved. By improving the current flow capacity of the tab 200, the traction battery can provide satisfying temperature rise performance during the charging or discharging of the traction battery, avoiding the safety hazard of a fire or an explosion of the traction battery. By disposing the tab 200 with the bent portion 220 between the plurality of tabs 200, the welding stability of the tab 200 can be increased to avoid the problems such as the raised edge of the bent tab 200. When the tab 200 with the bent portion 220 is disposed at the side of the plurality of tabs 200 away from the adapting member 400, the welding can be performed on the tab 200 conveniently. In this embodiment, by setting the plurality of positive tabs and the plurality of positive tabs to be identical in quantity and setting the bent portions 220 thereof to be identical in quantity, the positive tabs and the negative tabs will have a same current flow capacity, which can therefore make performance of the traction battery stable, avoiding a problem of a high current in one of the tabs 200.

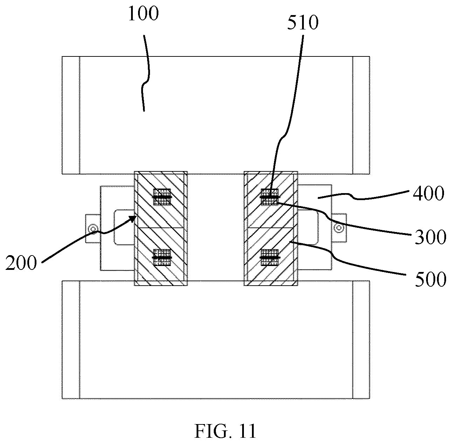

As illustrated in FIG. 11, embodiments in a second aspect of the present disclosure provide a traction battery. The traction battery includes the electrode assembly 10 according to any of the embodiments in the first aspect.

Since the traction battery according to the embodiments of the present disclosure includes the electrode assembly 10 according to any of the embodiments in the first aspect, the embodiments of the present disclosure can also provide advantageous effects in the embodiments of the first aspect.

Specifically, the traction battery according to the embodiments includes the electrode assembly 10. In the electrode assembly 10, the at least one tab 200 includes the tab body 210 and the bent portion 220. In some specific embodiments, the tab 200 is designed as a long tab with a long length. When the ultrasonic welding is performed, the tab 200 is bent to form the bent portion 220, and the ultrasonic welding is performed after the bent portion 220 is stacked on the tab body 210. In this case, since the thickness of the position where the ultrasonic welding is performed is increased, the welding stability of the tab 200 can be improved. In addition, when the thickness of the part of the tab 200 on which the welding is performed is increased, the current flow capacity of the tab 200 in the electrode assembly 10 can be improved. By improving the current flow capacity of the tab 200, the traction battery can provide satisfying temperature rise performance during the charging or discharging of the traction battery, avoiding the safety hazard of a fire or an explosion of the traction battery.

In some embodiments of the present disclosure, the traction battery further includes the adapting member 400 welded to the plurality of tabs 200 of the electrode assembly 10. The bent portion 220 of the tab 200 is located at a side of the tab body 210 away from the adapting member 200. The weld spot 300 at a connection between the adapting member 400 and the at least one tab 200 is located at the bent portion 220. In some embodiments, the tab 200 with the bent portion 220 may also be the tab 200 including the first bent section 221 and the second bent section 222. The weld spot 300 is formed after the welding penetrates the first bent section 221 and the second bent section 222.

The adapting member 400 is configured to connect an electrode lead terminal corresponding to the end cover in the battery cell and a corresponding tab 200 at the electrode assembly 10. Specifically, the plurality of tabs 200 in the electrode assembly 10 is connected to the adapting member 400 through the ultrasonic welding, and the adapting member 400 is connected to the electrode lead terminal in the battery cell through laser welding. The plurality of tabs 200 in the electrode assembly 10 is disposed at a side of the adapting member 400. When the welding is performed on the tab 200, a welding operation point is located at a side of the plurality of tabs 200. Since the tab 200 is thin, the ultrasonic welding is preferred. Of course, the laser welding may also be used. A specific welding method is not specifically limited in this embodiment. The weld spots 300 will be formed at surfaces of the plurality of tabs 200. When the ultrasonic welding is performed, the weld spots 300 are arranged in a dot array. A specific method for arranging the weld spots 300 is not specially limited in this embodiment.

In this embodiment, to stably fix the bent portion 220 to the tab body 210, the bent portion 220 needs to be welded to the tab body 210 during the welding of the tab 200 and thus the weld spot 300 in this embodiment is located at the bent portion. In this way, the welding stability of the tab 200 can be increased. Since the bent portion 220 of the tab 200 is located at the side of the tab body 210 away from the adapting member 400, whether the part of the tab 200 on which the welding is performed can cover the bent portion 220 of the tab 200 can be clearly observed during the welding of the tab 200, to ensure the yield rate of the welding.

In some embodiments of the present disclosure, the traction battery further includes a tape 500 adhering to a surface of the weld spot 300 formed through welding.

In the related art, the tape 500 is also referred to as a tab adhesive. Specifically, the tapes 500 are categorized into a blue adhesive, a white adhesive, a yellow adhesive, a black adhesive, and the like. A type of the tape 500 is not specifically limited in this embodiment.

In this embodiment, adhering the tape 500 to the surface of the weld spot 300 can, on the one hand, provide insulation, i.e., the tape 500 can avoid a conductive circuit formed when the tab 200 is in contact with an ambient environment, and on the other hand, prevent weld slags formed after the welding from falling into an interior of the battery cell.

In some embodiments of the present disclosure, the tape 500 has a slit 510 corresponding to the weld spot 300.

The slit 510 is a force unloading opening formed at the tape 500. A width of the slit 510 is not specifically limited. The slit 510 may be a breach cut on the tape 500. Or, the slit 510 may be formed by adhering two pieces of tapes 500 to the tab 200 in parallel and keeping the two pieces of tapes 500 from covering each other. This embodiment is not specifically limit in this regard.

In this embodiment, the tape 500 is adhered to the weld spot 300 of the tab 200, and the slit 510 is formed at the position of the tape 500 corresponding to the weld spot 300. In a subsequent transfer and production process, a stress can be released through forming the slit 510 on the tape 500, which can effectively prevent the tape 500 from pulling a root of the weld spot 300, avoiding cracking of a root of the weld spot 300 of an outermost tab 200.

Finally, it should be noted that each of the above embodiments is used only to illustrate, rather than to limit, the technical solutions of the present disclosure. Although the present disclosure has been described in detail with reference to the foregoing embodiments, it is conceivable for those skilled in the art that modifications can be made to the technical solutions described in the foregoing embodiments, or equivalent replacements can be made to some or all of the technical features in the technical solutions described in the foregoing embodiments. These modifications or equivalent replacements, which do not depart the essence of corresponding technical solutions from the scope of the technical solutions of the embodiments of the present disclosure, shall fall within the scope of the claims and the specification of the present disclosure. In particular, the technical features mentioned in individual embodiments can be combined arbitrarily without any structural conflict. The present disclosure is not limited to the particular embodiments disclosed herein, and includes all technical solutions falling within the scope of the claims.

## Claims

1. An electrode assembly, comprising:
a plurality of tabs stacked to each other, at least one of the plurality of tabs comprising a tab body and a free end connected to the tab body, the free end being formed into a bent portion through at least a single bending, and the bent portion being stacked at a side of the tab body.

2. The electrode assembly according to claim 1, wherein the bent portion comprises a first bent section and a second bent section, the first bent section being stacked at the side of the tab body, and the second bent section being stacked at a side of the first bent section away from the tab body.

3. The electrode assembly according to claim 2, wherein the first bent section is a bent section formed through a single bending of the free end of the at least one tab, wherein after the first bent section is further bent inwards, the first bent section is sandwiched between the tab body and the bent free end, and the second bent section is an outermost bent section.

4. The electrode assembly according to any one of claims 1 to 3, wherein the plurality of tabs comprises a tab with the bent portion and a plurality of tabs without the bent portion, wherein:
the tab with the bent portion is arranged between the plurality of tabs without the bent portion; or
the tab with the bent portion is arranged at a side of the plurality of tabs without the bent portion.

5. The electrode assembly according to claim 4, wherein the plurality of tabs comprises a plurality of positive tabs and a plurality of negative tabs, a quantity of the plurality of positive tabs being identical to a quantity of the plurality of negative tabs.

6. The electrode assembly according to claim 5, wherein a quantity of tabs with the bent portions in the plurality of positive tabs is identical to a quantity of tabs with the bent portions, in the plurality of negative tabs.

7. The electrode assembly according to any one of claims 1 to 3, wherein the at least one tab is a first tab or a second tab, the first tab and the second tab having opposite polarities.

8. The electrode assembly according to any one of claims 1 to 7, wherein the bent portion has a rectangular shape or a trapezoidal shape.

9. The electrode assembly according to any one of claims 1 to 7, further comprising:
a protection sheet sandwiched between two adjacent ones of the plurality of tabs and/or located at a side of the bent portion away from the tab body.

10. The electrode assembly according to claim 9, wherein the protection sheet covers the bent portion.

11. A traction battery, comprising at least one electrode assembly, the at least one electrode assembly being the electrode assembly according to claims 1 to 10.

12. The traction battery according to claim 11, further comprising:
an adapting member connected to the plurality of tabs of the electrode assembly through welding, wherein the bent portion of the at least one tab is located at a side of the tab body away from the adapting member, wherein a weld spot at a connection between the adapting member and the at least one tab is located at the bent portion.

13. The traction battery according to claim 12, further comprising:
a tape adhering to a surface of a weld spot formed through the welding.

14. The traction battery according to claim 13, wherein the tape has a slit corresponding to the weld spot.
